# EUROPEAN PATENT APPLICATION

(11) **EP 4 535 440 A1**
(43) Date of publication of application: **09.04.2025**
(21) Application number: 22950510.2
(22) Date of filing: 11.07.2022
(51) Int. Cl.: H01M 4/02

(54) **ELECTRODE ASSEMBLY, ELECTROCHEMICAL APPARATUS, AND ELECTRIC DEVICE**

(71) Applicant: Ningde Amperex Technology Limited, Ningde, Fujian 352100 (CN)
(72) Inventor: HU, Hongwei, Ningde, Fujian 352100 (CN)
(74) Representative: Icosa
(86) International application number: PCT/CN2022/104997
(87) International publication number: WO 2024/011379

(57) **Abstract**

This application relates to an electrode assembly, an electrochemical apparatus, and an electric device, and pertains to the field of energy storage technologies. Embodiments of this application provide an electrode assembly. The electrode assembly is a stacked structure. The electrode assembly includes a first portion and a second portion stacked together. The first portion and the second portion are each configured to be independently charged and discharged. A mass energy density of the first portion is greater than or equal to a mass energy density of the second portion; and a charge rate of the first portion is less than or equal to a charge rate of the second portion. The electrode assembly not only may meet fast charging requirements but also has large mass energy density.

## Description

### TECHNICAL FIELD

This application relates to the field of energy storage technologies, and specifically relates to an electrode assembly, an electrochemical apparatus, and an electric device.

### BACKGROUND

With the development of new energy technologies, energy storage devices have been used more and more widely, for example, used in mobile phones, laptop computers, electric bicycles, electric vehicles, electric airplanes, electric ships, electric toy cars, electric toy ships, electric toy airplanes, and electric tools.

As an energy storage device, an electrochemical apparatus generally undergoes electrochemical reactions through an electrode assembly and an electrolyte to output electrical energy. For electrochemical apparatuses, charging efficiency and mass energy density are both important performance indicators. However, in the prior art, the charging efficiency and mass energy density of electrochemical apparatuses cannot be balanced. In pursuit of high charging efficiency, the mass energy density is designed to be low, and vice versa. Therefore, how fast charging and large mass energy density are balanced is an urgent problem to be resolved.

### SUMMARY

This application is intended to provide an electrode assembly, an electrochemical apparatus, and an electric device. The electrode assembly not only may meet fast charging requirements but also has a large mass energy density.

This application is implemented using the following technical solutions.

According to a first aspect, an embodiment of this application provides an electrode assembly. The electrode assembly is a stacked structure. The electrode assembly includes a first portion and a second portion stacked together. The first portion and the second portion each include a positive electrode plate, a separator, and a negative electrode plate stacked together. The first portion and the second portion are configured to be independently charged and discharged. A mass energy density of the first portion is greater than or equal to a mass energy density of the second portion; and a charge rate of the first portion is less than or equal to a charge rate of the second portion. In this solution, the electrode assembly includes the first portion and the second portion stacked together, the first portion and the second portion each include a positive electrode plate, a separator, and a negative electrode plate stacked together, the first portion and the second portion can be independently charged and discharged, and the charge rate of the second portion is greater than or equal to the charge rate of the first portion. Therefore, when a user needs fast charging, the second portion may be charged fast, meeting temporary fast charging requirements of the user. In addition, the mass energy density of the first portion is greater than or equal to the mass energy density of the second portion, increasing the overall capacity of the electrode assembly. When a product does not need fast charging in a standby or sleep mode, the first portion may be charged to reserve power in advance and reduce fast charging frequency of the second portion which causes reduction of the cycle life thereof. The electrode assembly not only may meet fast charging requirements but also has large mass energy density.

According to some embodiments of this application, a ratio of the mass energy density of the first portion to the mass energy density of the second portion is 1.1 to 2.2; and a ratio of the charge rate of the first portion to the charge rate of the second portion is 0.2 to 0.8. If the difference in the mass energy density and charge rate between the first portion and the second portion is too small, for example, if the ratio of the mass energy density of the first portion to the mass energy density of the second portion is less than 1.1 and the ratio of the charge rate of the first portion to the charge rate of the second portion is greater than 0.8, although the above technical effect of flexibly meeting different use demands may be technically achieved, the excessively small difference in the mass energy density and charge rate between the first portion and the second portion leads to an excessively small difference in the energy density and charging capability of the first portion and the second portion. As compared to an increase in material preparation costs caused by respective preparation of electrode plates with different performance and an increase in manufacturing costs caused by assembling the electrode plates with different performance into a first portion and a second portion, the above technical effect is not significant, that is, the input-output ratio is small. If the difference in the mass energy density and charge rate between the first portion and the second portion is too large, for example, if the ratio of the mass energy density of the first portion to the mass energy density of the second portion is greater than 2.2 and the ratio of the charge rate of the first portion to the charge rate of the second portion is less than 0.2, although the basic technical effect of flexibly meeting different use requirements may be achieved, heat generation of the second portion is far more than heat generation of the first portion when the first portion and the second portion are charged simultaneously, easily causing significant uneven temperature distribution in the electrochemical apparatus, affecting the performance of different electrolytes in the electrochemical apparatus, leading to side reactions, and shortening the service life of the electrochemical apparatus.

Preferably, the ratio of the mass energy density of the first portion to the mass energy density of the second portion is 1.3 to 1.8; and the ratio of the charge rate of the first portion to the charge rate of the second portion is 0.4 to 0.7. This facilitates the preparation of electrode plates with different energy densities and charge rates for the first portion and the second portion by adjusting only a compaction degree using similar positive or negative electrode materials, may significantly reduce material preparation costs, and also may balance local temperature differences in the electrochemical apparatus when the first portion and the second portion are charged simultaneously, thereby implementing better temperature management of the electrochemical apparatus.

According to some embodiments of this application, a coating weight of an active substance of the positive electrode plate of the first portion is greater than or equal to a coating weight of an active substance of the positive electrode plate of the second portion; a compacted density of the active substance of the positive electrode plate of the first portion is greater than or equal to a compacted density of the active substance of the positive electrode plate of the second portion; a coating weight of an active substance of the negative electrode plate of the first portion is greater than or equal to a coating weight of an active substance of the negative electrode plate of the second portion; and a compacted density of the active substance of the negative electrode plate of the first portion is greater than or equal to a compacted density of the active substance of the negative electrode plate of the second portion. In this solution, the coating weight (coating weight on one side) and compacted density of the active substance of the positive electrode plate of the first portion are both greater than or equal to the coating weight and compacted density of the active substance of the positive electrode plate of the second portion, such that the positive electrode plate of the first portion has a larger active substance capacity; and similarly, the coating weight and compacted density of the active substance of the negative electrode plate of the first portion are both greater than or equal to the coating weight and compacted density of the active substance of the negative electrode plate of the second portion, such that the negative electrode plate of the first portion has a larger active substance capacity, and thus the mass energy density of the first portion is greater than or equal to the mass energy density of the second portion, making the overall electrode assembly have a large mass energy density and meet the use requirements.

According to some embodiments of this application, an intermediate component is disposed between first portion and second portion. In this solution, the first portion and the second portion are connected through the intermediate component to achieve assembly of the first portion and the second portion.

According to some embodiments of this application, the intermediate component is a double-sided electrode plate with both sides provided with the active substance. In this solution, the intermediate component is a double-sided electrode plate. The intermediate component may be used in cooperation with the first portion and the second portion respectively, and the electrode assembly has a larger active substance capacity to increase the overall capacity of the electrode assembly.

According to some embodiments of this application, a coating weight of the active substance on a side of the double-sided electrode plate facing the first portion is greater than or equal to a coating weight of the active substance on a side of the double-sided electrode plate facing the second portion, and a compacted density of the active substance on the side of the double-sided electrode plate facing the first portion is greater than or equal to a compacted density of the active substance on the side of the double-sided electrode plate facing the second portion. In this solution, the coating weight and compacted density of the active substance on the side of the double-sided electrode plate facing the first portion are both greater than or equal to the coating weight and compacted density of the active substance on the side of the double-sided electrode plate facing the second portion, ensuring that the coating weight and compacted density on the side of the double-sided electrode plate facing the first portion may match the coating weight and compacted density of the electrode plate of the first portion, and the coating weight and compacted density on the side of the double-sided electrode plate facing the second portion may match the coating weight and compacted density of the electrode plate of the second portion, thereby achieving a good match between the double-sided electrode plate and the first and second portions.

According to some embodiments of this application, the intermediate component is a separator. In this solution, using a separator as the intermediate component may ensure a compact structure of the electrode assembly. Compared with using a double-sided electrode plate as the intermediate component, using a separator may reduce a procedure of separately preparing the double-sided electrode plate, thereby reducing material preparation and assembly costs.

According to some embodiments of this application, when the intermediate component is a separator, in the first portion, an electrode plate closest to the intermediate component is a first electrode plate; in the second portion, an electrode plate closest to the intermediate component is a second electrode plate; the first electrode plate and the second electrode plate each have a current collector with both sides provided with the active substance; and the first electrode plate and the second electrode plate have opposite polarities. In this solution, the electrode assembly may be produced by a most conventional method of sequentially stacking a positive electrode, a separator, and a negative electrode in a laminated battery. In addition, when the first portion and the second portion are charged simultaneously, all active substances on the first electrode plate and the second electrode plate may participate in ion intercalation and deintercalation, increasing the mass energy density and achieving the same effect of increasing the overall capacity and mass energy density of the electrode assembly as using the aforementioned double-sided electrode plate as the intermediate component.

According to some embodiments of this application, when the intermediate component is a separator and the first electrode plate and the second electrode plate are double-sided electrode plates with opposite polarities, it is preferable that the first electrode plate has a negative polarity and the second electrode plate has a positive polarity. Thus, when the first portion and the second portion are charged simultaneously, using the first electrode plate with a larger coating weight as the negative electrode may allow for full intercalation of lithium ions into the second electrode plate without lithium precipitation. However, if the first electrode plate serves as the positive electrode and the second electrode plate serves as the negative electrode, since the first electrode plate has a larger coating weight, when the first portion and the second portion are charged simultaneously, excessive lithium ions may be deintercalated from the first electrode plate and thus cannot be fully intercalated into the second electrode plate, leading to the risk of lithium precipitation. Such situation may still solve the basic technical problems of this application but results in certain loss in cycling performance.

It is worth noting that in some other embodiments of this application, when the intermediate component is a separator, the first electrode plate and/or the second electrode plate may alternatively be configured as a single-sided electrode plate, that is, the current collector on a side of at least one of the first electrode plate and the second electrode plate close to the intermediate component is uncoated with the active substance. The polarities of the first electrode plate and the second electrode plate may be the same or different. Moreover, since an adhesion effect between a separator as the intermediate component and an uncoated current collector is unsatisfactory, an insulating layer or an adhesive material may be disposed between a single-sided first electrode plate and/or second electrode plate and the separator, to improve the adhesion effect between the first electrode plate and/or second electrode plate and the separator, improve the overall adhesion stability of the electrode assembly, also may improve the insulation effect between the first electrode plate and the second electrode plate, and also may reduce the risk of short circuit caused by contact between the positive electrode plate and the negative electrode plate of the electrode assembly.

In addition, in some other embodiments of this application, the intermediate component may alternatively be hot glue. In this solution, the insulating material is hot glue, which not only has an insulation effect but also may improve the connection stability between the first portion and the second portion, thereby reducing the risk of positional movement of the first portion relative to the second portion.

According to some embodiments of this application, the positive electrode plate of the first portion includes a first positive electrode tab; the negative electrode plate of the first portion includes a first negative electrode tab; the positive electrode plate of the second portion includes a second positive electrode tab; the negative electrode plate of the second portion includes a second negative electrode tab; and the electrode assembly satisfies: in a stacking direction of the electrode plates, a projection of the first positive electrode tab does not overlap a projection of the second positive electrode tab, and a projection of the first negative electrode tab overlaps a projection of the second negative electrode tab; or, in a stacking direction of the electrode plates, a projection of the first positive electrode tab overlaps a projection of the second positive electrode tab, and a projection of the first negative electrode tab does not overlap a projection of the second negative electrode tab; or, in a stacking direction of the electrode plates, a projection of the first positive electrode tab does not overlap a projection of the second positive electrode tab, and a projection of the first negative electrode tab does not overlap a projection of the second negative electrode tab. In this solution, the tabs of the electrode assembly can be disposed at different positions according to different requirements. In addition, when the tabs, having the same polarity, of the first portion and the second portion overlap, the first portion and the second portion may share the tabs to reduce the number of electrode output components and reduce manufacturing costs. The tabs of the first portion and the second portion may alternatively not overlap to meet a condition that the first portion and the second portion are connected in series or in parallel as required in the electrode assembly through circuit control, so as to adapt to complicated power demands of electric devices. For example, when an electric device requires a large current, the first portion and the second portion may be connected in parallel (when the first portion and the second portion share tabs, they may also be connected in parallel to output a large current); and when the electric device requires a large voltage, the first portion and the second portion may be connected in series.

According to a second aspect, an embodiment of this application further provides an electrochemical apparatus including the electrode assembly according to some embodiments of the first aspect, an accommodating member, and an electrolyte, where the electrode assembly and electrolyte are both accommodated in accommodating member. In this solution, directly accommodating the electrode assembly and the electrolyte of this application in the same accommodating member may realize performance expression about different charge rates and mass energy densities in one accommodating member of one electrochemical apparatus. Compared to a conventional method of connecting different electrochemical apparatuses in series and in parallel and then packaging them to achieve the purpose of performance expression about different charge rates and mass energy densities, the solution of this application may reduce procedures and costs.

According to some embodiments of this application, the positive electrode plate of the first portion includes a first positive electrode tab; the negative electrode plate of the first portion includes a first negative electrode tab; the positive electrode plate of the second portion includes a second positive electrode tab; and the negative electrode plate of the second portion includes a second negative electrode tab.

The electrochemical apparatus satisfies: in a stacking direction of the electrode plates, a projection of the first positive electrode tab does not overlap a projection of the second positive electrode tab; a projection of the first negative electrode tab overlaps a projection of the second negative electrode tab; the first positive electrode tab is welded to a first positive electrode terminal; the second positive electrode tab is welded to a second positive electrode terminal; the first negative electrode tab and the second negative electrode tab are welded to a negative electrode terminal; and the first positive electrode terminal, the second positive electrode terminal, and the negative electrode terminal extend out of the accommodating member; or, in a stacking direction of the electrode plates, a projection of the first positive electrode tab overlaps a projection of the second positive electrode tab; a projection of the first negative electrode tab does not overlap a projection of the second negative electrode tab; the first negative electrode tab is welded to a first negative electrode terminal; the second negative electrode tab is welded to a second negative electrode terminal; the first positive electrode tab and the second positive electrode tab are welded to a positive electrode terminal; and the first negative electrode terminal, the second negative electrode terminal, and the positive electrode terminal extend out of the accommodating member; or, in a stacking direction of the electrode plates, a projection of the first positive electrode tab does not overlap a projection of the second positive electrode tab; a projection of the first negative electrode tab does not overlap a projection of the second negative electrode tab; the first positive electrode tab is welded to a third positive electrode terminal; the second positive electrode tab is welded to a fourth positive electrode terminal; the first negative electrode tab is welded to a third negative electrode terminal; the second negative electrode tab is welded to a fourth negative electrode terminal; and the third positive electrode terminal, the fourth positive electrode terminal, the third negative electrode terminal, and the fourth negative electrode terminal extend out of the accommodating member. In this solution, series and/or parallel connection may be implemented as required in one electrochemical apparatus, greatly expanding the application scenarios of the electrochemical apparatus.

According to a third aspect, an embodiment of this application further provides an electric device including the electrochemical apparatus according to of some embodiments of the second aspect.

For additional aspects and advantages of this application, some will be given in the following description, and some will become apparent in the following description or will be understood in the practice of this application.

### BRIEF DESCRIPTION OF DRAWINGS

To describe the technical solutions in some embodiments of this application more clearly, the following briefly describes the accompanying drawings required for describing these embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is a schematic structural diagram of an electrochemical apparatus according to an embodiment of this application;
FIG. 3 is a schematic diagram of an electrode assembly according to some embodiments of this application;
FIG. 4 is a schematic diagram of an electrode plate according to some embodiments of this application;
FIG. 5 is a schematic diagram of an electrode plate according to some other embodiments of this application;
FIG. 6 is a schematic diagram of an intermediate component of an electrode assembly according to some embodiments of this application;
FIG. 7 is a schematic diagram of an intermediate component of an electrode assembly according to some other embodiments of this application;
FIG. 8 is a schematic structural diagram of a first electrode plate according to some embodiments of this application;
FIG. 9 is a schematic structural diagram of a second electrode plate according to some embodiments of this application;
FIG. 10 is a schematic diagram of a bundling member on a first portion according to some embodiments of this application;
FIG. 11 is a schematic diagram of a bundling member on a second portion according to some embodiments of this application;
FIG. 12 is a schematic diagram of a bundling member on a first portion according to some other embodiments of this application;
FIG. 13 is a schematic diagram of a bundling member on a second portion according to some other embodiments of this application;
FIG. 14 is a schematic diagram showing that a projection of a first negative electrode tab overlaps a projection of a second negative electrode tab according to some embodiments of this application;
FIG. 15 is a schematic diagram showing that a projection of a first positive electrode tab overlaps a projection of a second positive electrode tab according to some embodiments of this application; and
FIG. 16 is a schematic diagram showing that a projection of a first positive electrode tab does not overlap a projection of a second positive electrode tab and a projection of a first negative electrode tab does not overlap a projection of a second negative electrode tab according to some embodiments of this application.

In the accompanying drawings, the figures are not necessarily drawn to scale.

Description of reference signs: 100. battery; 1. electrochemical apparatus; 10. electrode assembly; 101. electrode plate; 1011. current collector; 1012. active substance layer; 1013. insulating layer; 102. separator; 11. first portion; 111. first electrode plate; 112. first positive electrode tab; 113. first negative electrode tab; 12. second portion; 121. second electrode plate; 122. second positive electrode tab; 123. second negative electrode tab; 13. intermediate component; 14. bundling member; 20. accommodating member; 21. housing; 22. end cover; 23. electrode terminal; 200. controller; 300. motor; and 1000. vehicle.

### DESCRIPTION OF EMBODIMENTS

The following describes in detail some embodiments of technical solutions of this application with reference to the accompanying drawings. The following embodiments are merely intended for a clearer description of the technical solutions of this application and therefore are merely used as examples which do not constitute any limitation on the protection scope of this application.

Unless otherwise defined, all technical and scientific terms used herein shall have the same meanings as commonly understood by persons skilled in the art to which this application pertains. The terms used herein are intended to merely describe specific embodiments rather than to limit this application. The terms "include", "comprise", and any other variations thereof in the specification, claims and brief description of drawings of this application are intended to cover non-exclusive inclusions.

In the description of some embodiments of this application, the terms "first", "second", and the like are merely used to distinguish between different objects, and shall not be understood as any indication or implication of relative importance or any implicit indication of the number, specific sequence or primary-secondary relationship of the technical features indicated.

In this specification, reference to "embodiment" means that specific features, structures, or characteristics described with reference to this embodiment may be included in at least one embodiment of this application. The word "embodiment" appearing in various places in the specification does not necessarily refer to the same embodiment or an independent or alternative embodiment that is exclusive of other embodiments. Persons skilled in the art explicitly and implicitly understand that some embodiments described herein may combine with other embodiments.

In the descriptions of some embodiments of this application, the term "a plurality of" means more than two (inclusive). Similarly, "a plurality of groups" means more than two (inclusive) groups, and "a plurality of pieces" means more than two (inclusive) pieces, unless otherwise specifically defined.

In the descriptions of some embodiments of this application, unless otherwise specified and defined explicitly, the technical terms "mounting", "connection", "joining", and "fastening" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in some embodiments of this application as appropriate to specific situations.

Mass energy density and charge rate are both key performance indicators of electrochemical apparatuses. In the prior art, an electrode plate of an electrochemical apparatus is designed to meet specific charging capability requirements. The coating weight and compacted density of an active substance of each electrode plate are at the same level, meaning that all the electrode plates in the electrochemical apparatus have the same charging capability. An electrochemical apparatus with high charging efficiency uses a thin electrode plate, and the compacted density and coating weight of the active substance of the electrode plate are small, resulting in a small mass energy density of the electrochemical apparatus. An electrochemical apparatus with a large mass energy density uses a thick electrode plate, reducing the charging efficiency of the electrochemical apparatus. In other words, it is impossible to meet the requirements of both large mass energy density and fast charging.

In view of this, to meet the requirements of both large mass energy density and fast charging of electrochemical apparatuses, this application provides an electrode assembly. The electrode assembly includes two parts: one part has a larger mass energy density and a smaller charge rate, and the other part has a larger charge rate and a smaller mass energy density. When an electrochemical apparatus is in urgent need of charging, only the part with a larger charge rate can be charged; and when the electrochemical apparatus is not in urgent need of charging, only the part with a larger mass energy density can be charged, or both the two parts can be charged simultaneously. Therefore, the electrode assembly may meet the requirements of both large mass energy density and fast charging. In addition, different parts of the electrode assembly may be flexibly used based on a situation of an electric device actually used by a user, thereby prolonging the cycle life of the electrode assembly.

The electrode assembly provided in some embodiments of this application is applicable to electrochemical apparatuses and electric devices using electrochemical apparatuses.

An embodiment of this application provides an electric device, the electric device includes an electrochemical apparatus, and the electrochemical apparatus is configured to provide electrical energy.

The electric device may include but is not limited to: a vehicle, a mobile phone, a laptop computer, earphones, a video recorder, a calculator, a ship, a spacecraft, and an electric toy. The vehicle may be a fossil fuel vehicle, a natural-gas vehicle, a new energy vehicle, a motorbike, an electric bicycle, or the like. The spacecraft may be an airplane, a rocket, a space shuttle, a spaceship, or the like. The electric toy may be a game console, an electric vehicle toy, an electric ship toy, an electric airplane toy, or the like. The electric tool may be an electric metal cutting tool, an electric grinding tool, an electric assembly tool, an electric railway-specific tool, or the like. The foregoing electric device is not particularly limited in this embodiment of this application.

For ease of description, the electric device being a vehicle is used as example for description of the following embodiments.

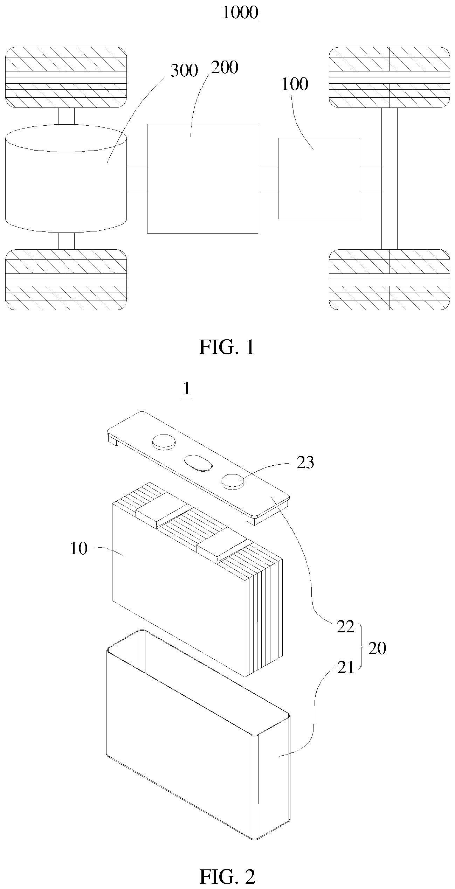

Referring to FIG. 1, and FIG. 1 is a schematic structural diagram of a vehicle 1000 according to some embodiments of this application. The vehicle 1000 is provided with a battery 100 inside. The battery 100 may be configured to provide power for the vehicle 1000. The battery 100 may be disposed at the bottom, front, or rear of the vehicle 1000.

The vehicle 1000 may further include a controller 200 and a motor 300, where the controller 200 is configured to control the battery 100 to provide power for the motor 300. The battery 100 may be used as an operating power source of the vehicle 1000. For example, the battery 100 is used to satisfy power needs of start, navigation, and driving of the vehicle 1000. The battery 100 may also be used as a driving power source of the vehicle 1000, replacing or partially replacing fuel or natural gas to provide driving power for the vehicle 1000.

In these embodiments of this application, the battery 100 may include one or more electrochemical apparatuses 1. In the battery 100, when there are a plurality of electrochemical apparatuses 1, the plurality of electrochemical apparatuses 1 may be connected in series, parallel, or series-parallel, where being connected in series-parallel means a combination of series connection and parallel connection of the plurality of electrochemical apparatuses 1.

The battery 100 may further include a busbar, and the plurality electrochemical apparatuses 1 may be electrically connected through the busbar, so that the plurality of electrochemical apparatuses 1 are connected in series, parallel, or series-parallel. The busbar may be a conductor made of metal, for example, copper, iron, aluminum, stainless steel, or aluminum alloy.

Referring to FIG. 2, and FIG. 2 is a schematic structural diagram of an electrochemical apparatus 1 according to some embodiments of this application. The electrochemical apparatus 1 includes an electrode assembly 10 and an electrolyte, and the electrochemical apparatus 1 undergoes chemical reactions through the electrode assembly 10 and the electrolyte to output electrical energy.

The electrochemical apparatus 1 may be a lithium-ion battery, a lithium-sulfur battery, a sodium-lithium-ion battery, a sodium-ion battery, a magnesium-ion battery, or the like. This is not limited in these embodiments of this application. The electrochemical apparatus 1 may be cylindrical, flat, rectangular, or of another shape. This is not limited in these embodiments of this application either. Electrochemical apparatuses 1 are typically divided into three types by packaging method: cylindrical batteries, prismatic batteries, and pouch batteries. This is not limited in these embodiments of this application either.

In some embodiments, still referring to FIG. 2, the electrochemical apparatus 1 may further include an accommodating member 20, the accommodating member 20 is configured to accommodate the electrode assembly 10 and the electrolyte, and the accommodating member 20 may be an accommodating housing such as an aluminum housing or a steel housing. The accommodating member 20 may alternatively be an accommodating bag, for example, an accommodating bag made of an aluminum-plastic film.

In some embodiments, the accommodating member 20 may include a housing 21 and an end cover 22. The housing 21 is a component for the accommodating the electrode assembly 10. The housing 21 may be a hollow structure with an opening formed in one end. The housing 21 may be of various shapes, such as cylinder or cuboid. The housing 21 may be made of various materials, for example, copper, iron, aluminum, steel, and aluminum alloy. The end cover 22 is a component that covers the opening of the housing 21 to isolate an internal environment of the electrochemical apparatus 1 from an external environment. The end cover 22 covers the opening of the housing 21, and the end cover 22 and the housing 21 jointly define a sealed space for accommodating the electrode assembly 10, the electrolyte, and other components. The end cover 22 may fit the housing 21 in shape. For example, if the housing 21 is a cuboid structure, the end cover 22 is a rectangular plate-shaped structure that fits the housing 21. For another example, if the housing 21 is a cylindrical structure, the end cover 22 is a circular plate-shaped structure that fits the housing 21. The end cover 22 may also be made of various materials, for example, copper, iron, aluminum, steel, and aluminum alloy.

In addition, the end cover 22 may be provided with an electrode terminal 23, where the electrode terminal 23 is configured to be electrically connected to the electrode assembly 10, so as to output electrical energy of the electrochemical apparatus 1. The electrode terminal 23 includes a positive electrode terminal and a negative electrode terminal. The positive electrode terminal is electrically connected to a positive electrode tab of the electrode assembly 10, and the negative electrode terminal is electrically connected to a negative electrode tab of the electrode assembly 10.

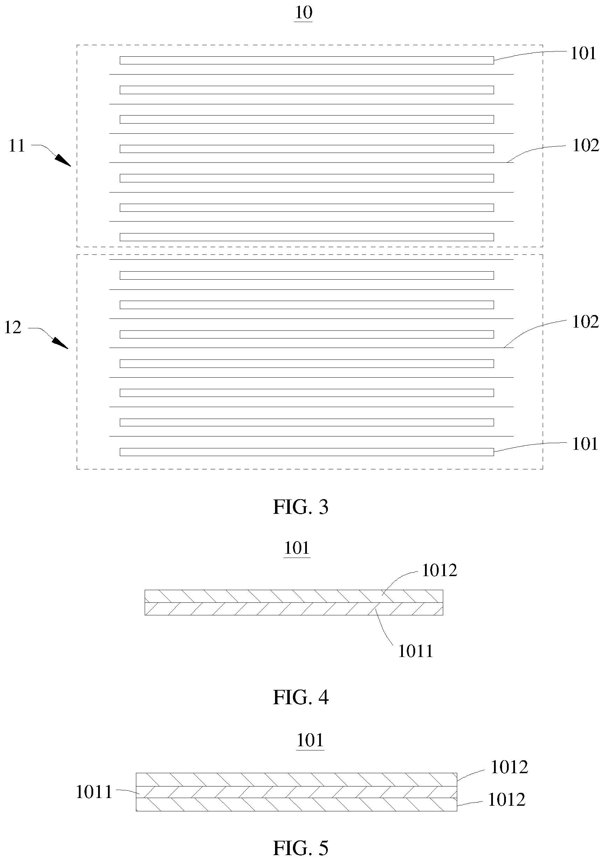

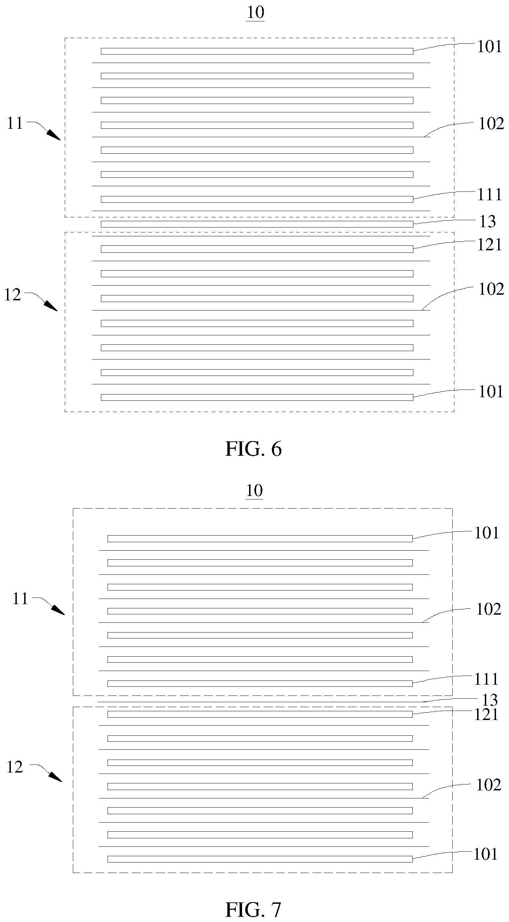

Referring to FIG. 3, FIG. 3 is a schematic diagram of an electrode assembly 10 according to some embodiments of this application. An embodiment of this application provides an electrode assembly 10. The electrode assembly 10 is a stacked structure. The electrode assembly 10 includes a first portion 11 and a second portion 12 stacked together. The first portion 11 and the second portion 12 are each configured to be independently charged and discharged. A mass energy density of the first portion 11 is greater than or equal to a mass energy density of the second portion 12; and a charge rate of the first portion 11 is less than or equal to a charge rate of the second portion 12. It is worth noting that a dashed box enclosing the first portion and the second portion in FIG. 3 is merely for better distinguishing the two portions in the accompanying drawings so as to facilitate identification, but does not indicate that the first portion 11 and the second portion 12 are separately packaged. In actual production, the first portion 11 and the second portion 12 belong to a same electrode assembly 10 and are integrally packaged in one accommodating member 20, and an electrolyte is injected into the accommodating member 20. Such case is also applicable to FIG. 6 and FIG. 7.

A method for testing the mass energy densities of the first portion 11 and the second portion 12 of the electrode assembly 10 is as follows: During preparation of an electrochemical apparatus, a weight W1 of the first portion 11 and a weight W2 of the second portion 12 may be measured first; after the electrode assembly 10 is assembled into an electrochemical apparatus, the first portion 11 and the second portion 12 are separately charged and discharged to obtain an energy C1 of the first portion 11 and an energy C2 of the second portion 12; and then the mass energy densities of the first portion 11 and the second portion 12 are calculated based on C1/W1 and C2/W2.

Charge rate is a measure of charging speed and refers to a current value required for the electrochemical apparatus to be charged to its rated capacity within a specified time. Numerically, it is equal to the multiple of the rated capacity of the electrochemical apparatus, that is, "charge current/rated capacity=charge rate". The charge rates of the first portion 11 and the second portion 12 of the electrode assembly 10 are tested using the following method: First, the first portion 11 and the second portion 12 are separately charged to a specified voltage at a constant current of 100 mA to 1000 mA, and then charged to a charge current of 20 mA to 200 mA at a constant voltage, where a charge cut-off voltage may be set with a specified voltage gradient, for example, between 3.5 V to 4.6 V, with one gradient set between every 20 mV to 50 mV; the electrochemical apparatus that has been charged according to different voltage gradients is disassembled, where the highest voltage gradients U1 and U2, at which negative electrode interfaces of the first portion 11 and the second portion 12 are golden and free of lithium precipitation, are full-charge voltages of the first portion 11 and the second portion 12; and charge capacities corresponding to U1 and U2 are used as the rated capacities C1 and C2 of the first portion 11 and the second portion 12. Then, a specified charge current gradient is set, for example, the two portions are separately charged according to 0.5C1 to 10C1 and 0.5C2 to 10C2, with one gradient set between every 0.5C to 1C; the first portion 11 and the second portion 12 are separately charged to full-charge voltages U1 and U2 at a constant current according to different current gradients, and then charged at a constant voltage until the current drops to 0.01C1 to 0.1C1/0.01C2 to 0.1C2 (commonly used cut-off current values, where the multiple of the rated capacity is 0.02, 0.025, or 0.05); after charging is ended, the electrochemical apparatus is disassembled; the highest current gradients at which the negative electrode interfaces of the first portion 11 and the second portion 12 are golden and free of lithium precipitation, or the multiples X1 and X2 of the rated capacities, are used as the charge rates of the first portion 11 and the second portion 12, respectively.

According to the electrode assembly 10 of this embodiment of this application, the electrode assembly 10 includes the first portion 11 and the second portion 12 stacked together; the first portion 11 and the second portion 12 each include a positive electrode plate, a separator, and a negative electrode plate stacked together; the first portion 11 and the second portion 12 may be independently charged and discharged; and the charge rate of the second portion 12 is greater than or equal to the charge rate of the first portion 11. Therefore, when a user needs fast charging, the second portion 12 may be charged fast, meeting temporary fast charging requirements of the user. In addition, the mass energy density of the first portion 11 is greater than or equal to the mass energy density of the second portion 12, increasing the overall capacity of the electrode assembly 10. When a product does not need fast charging in a standby or sleep mode, the first portion 11 may be charged to reserve power in advance and reduce fast charging frequency of the second portion 12 which causes reduction of the cycle life thereof. The electrode assembly 10 not only may meet the fast charging requirements but also has a large mass energy density.

According to some embodiments of this application, the ratio of the mass energy density of the first portion 11 to the mass energy density of the second portion 12 is 1.1 to 2.2; and the ratio of the charge rate of the first portion 11 to the charge rate of the second portion 12 is 0.2 to 0.8. If the difference in the mass energy density and charge rate between the first portion 11 and the second portion 12 is too small, for example, if the ratio of the mass energy density of the first portion 11 to the mass energy density of the second portion 12 is less than 1.1 and the ratio of the charge rate of the first portion 11 to the charge rate of the second portion 12 is greater than 0.8, although the above technical effect of flexibly meeting different use demands may be technically achieved, the excessively small difference in the mass energy density and charge rate between the first portion 11 and the second portion 12 leads to an excessively small difference in the energy density and charging capability of the first portion 11 and the second portion 12. As compared to an increase in material preparation costs caused by respective preparation of electrode plates with different performance and an increase in manufacturing costs caused by assembling the electrode plates with different performance into a first portion 11 and a second portion 12, the above technical effect is not significant, that is, the input-output ratio is small. If the difference in the mass energy density and charge rate between the first portion 11 and the second portion 12 is too large, for example, if the ratio of the mass energy density of the first portion 11 to the mass energy density of the second portion 12 is greater than 2.2 and the ratio of the charge rate of the first portion 11 to the charge rate of the second portion 12 is less than 0.2, although the basic technical effect of flexibly meeting different use requirements may be achieved, heat generation of the second portion 12 is far more than heat generation of the first portion 11 when the first portion 11 and the second portion 12 are charged simultaneously, easily causing significant uneven temperature distribution in the electrochemical apparatus 1, affecting the performance of different electrolytes in the electrochemical apparatus 1, leading to side reactions, and shortening the service life of the electrochemical apparatus 1.

Optionally, the ratio of the mass energy density of the first portion 11 to the mass energy density of the second portion 12 may be 1.1, 1.2, 1.3, 1.4, 1.5, 1.6, 1.7, 1.8, 1.9, 2, 2.1, 2.2, or the like; and the charge rate of the first portion 11 to the charge rate of the second portion 12 may be 0.2, 0.3, 0.4, 0.5, 0.6, 0.7, 0.8, or the like.

Preferably, the ratio of the mass energy density of the first portion 11 to the mass energy density of the second portion 12 is 1.3 to 1.8; and the ratio of the charge rate of the first portion 11 to the charge rate of the second portion 12 is 0.4 to 0.7. This facilitates the preparation of electrode plates with different energy densities and charge rates for the first portion 11 and the second portion 12 by adjusting only a compaction degree using similar positive or negative electrode materials, may significantly reduce material preparation costs, and also may balance local temperature differences in the electrochemical apparatus 1 when the first portion 11 and the second portion 12 are charged simultaneously, thereby implementing better temperature management of the electrochemical apparatus 1.

The first portion 11 and the second portion 12 each include at least one electrode plate 101. Optionally, the first portion 11 and the second portion 12 each include a plurality of electrode plates 101. The plurality of electrode plates 101 include positive electrode plates and negative electrode plates; the positive electrode plates and the negative electrode plates are stacked; metal ions move between the positive electrode plates and the negative electrode plates; and a separator is disposed between the positive electrode plate and the negative electrode plate.

Referring to FIG. 4 and FIG. 5, FIG. 4 is a schematic diagram of an electrode plate 101 according to some embodiments of this application, and FIG. 5 is a schematic diagram of an electrode plate 101 according to some other embodiments of this application. The electrode plate 101 includes a current collector 1011 and an active substance layer 1012 applied on a surface of the current collector 1011. The active substance layer 1012 is located on one side or two opposite sides of the current collector 1011 in a thickness direction. As shown in FIG. 4, when the active substance layer 1012 is located on one side of the current collector 1011 in the thickness direction, the electrode plate 101 is a single-sided electrode plate. As shown in FIG. 5, when the active substance layer 1012 is located on two opposite sides of the current collector 1011 in the thickness direction, the electrode plate 101 is a double-sided electrode plate.

The positive electrode plate includes a positive electrode current collector and a positive electrode active substance layer. The positive electrode active substance layer is applied on a surface of the positive electrode current collector. A portion of the current collector that is uncoated with the positive electrode active substance layer protrudes from a portion that is coated with the positive electrode active substance layer, serving as a positive electrode tab. A lithium-ion battery is used as an example, in which the positive electrode current collector may be made of aluminum, and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. A portion of the current collector that is uncoated with the negative electrode active substance layer protrudes from a portion that is coated with the negative electrode active substance layer, serving as a negative electrode tab. The negative electrode current collector may be made of copper, and the negative electrode active substance may be carbon, silicon, or the like. To allow a large current to pass through without any fusing, a plurality of positive electrode tabs are provided and stacked together, and a plurality of negative electrode tabs are provided and stacked together. The separator may be made of PP, PE, or the like.

According to some embodiments of this application, a coating weight of an active substance of the positive electrode plate of the first portion 11 is greater than or equal to a coating weight of an active substance of the positive electrode plate of the second portion 12; a compacted density of the active substance of the positive electrode plate of the first portion 11 is greater than or equal to a compacted density of the active substance of the positive electrode plate of the second portion 12; a coating weight of an active substance of the negative electrode plate of the first portion 11 is greater than or equal to a coating weight of an active substance of the negative electrode plate of the second portion 12; and a compacted density of the active substance of the negative electrode plate of the first portion 11 is greater than or equal to a compacted density of the active substance of the negative electrode plate of the second portion 12. This realizes the difference in the mass energy density and the charge rate between the first portion 11 and the second portion 12. The active substance of the positive electrode plate of the first portion 11 and the active substance of the positive electrode plate of the second portion 12 may be made of a same material. The active substance of the negative electrode plate of the first portion 11 and the active substance of the negative electrode plate of the second portion 12 may be made of a same material. That is, the first portion 11 and the second portion 12 may use a same type of positive and negative electrode active substances, and the difference in the mass energy density and charge rate between the first portion 11 and the second portion 12 is achieved by controlling the compacted density and coating weight of the electrode plates of different portions. Evidently, persons skilled in the art may also achieve the difference in the mass energy density and charge rate between the first portion 11 and the second portion 12 by combination of active material type adjustment and electrode plate preparation processes, and the like. It should be noted that the coating weight of the active substance mentioned above refers to a coating weight of the active substance on one side of the current collector.

In this solution, the coating weight and compacted density of the active substance of the positive electrode plate of the first portion 11 are both greater than or equal to the coating weight and compacted density of the positive electrode plate of the second portion 12, such that the positive electrode plate of the first portion 11 has a larger active substance capacity; and similarly, the coating weight and compacted density of the active substance of the negative electrode plate of the first portion 11 are greater than or equal to the coating weight and compacted density of the negative electrode plate of the second portion 12, such that the negative electrode plate of the first portion 11 has a larger active substance capacity, and thus the mass energy density of the first portion 11 is greater than or equal to the mass energy density of the second portion 12, making the overall electrode assembly 10 have a large mass energy density and meet the use requirements.

Referring to FIG. 6 and FIG. 7, FIG. 6 is a schematic diagram of an intermediate component 13 of an electrode assembly 10 according to some embodiments of this application, and FIG. 7 is a schematic diagram of an intermediate component 13 of an electrode assembly 10 according to some other embodiments of this application. According to some embodiments of this application, the intermediate component 13 is disposed between first portion 11 and second portion 12.

The intermediate component 13 is a component disposed between the first portion 11 and the second portion 12, and the intermediate component 13 may connect the first portion 11 and the second portion 12 to implement assembly of the first portion 11 and the second portion 12.

According to some embodiments of this application, as shown in FIG. 6, the intermediate component 13 is a double-sided electrode plate with both sides provided with the active substance. The double-sided electrode plate means that the two sides of the current collector in the thickness direction are both provided with the active substance layer. The double-sided electrode plate may be a positive electrode plate or a negative electrode plate. Correspondingly, as well known in the art, the polarities of the electrode plates of the first portion 11 and the second portion 12 corresponding to the double-sided electrode plate should be opposite to the polarity of the double-sided electrode plate.

In this solution, the intermediate component 13 is a double-sided electrode plate. The intermediate component 13 may be used in cooperation with the first portion 11 and the second portion 12 respectively, and the electrode assembly 10 has a larger active substance capacity to increase the overall capacity of the electrode assembly 10.

According to some embodiments of this application, a coating weight of the active substance on a side of the double-sided electrode plate facing the first portion 11 is greater than or equal to a coating weight of the active substance on a side of the double-sided electrode plate facing the second portion 12, and a compacted density of the active substance on the side of the double-sided electrode plate facing the first portion 11 is greater than or equal to a compacted density of the active substance on the side of the double-sided electrode plate facing the second portion 12.

In this solution, the coating weight and compacted density of the active substance on the side of the double-sided electrode plate facing the first portion 11 are both greater than or equal to the coating weight and compacted density of the active substance on the side facing the second portion 12, ensuring that the coating weight and compacted density on the side of the double-sided electrode plate facing the first portion 11 may match the coating weight and compacted density of the electrode plate of the first portion 11, and the coating weight and compacted density on the side of the double-sided electrode plate facing the second portion 12 may match the coating weight and compacted density of the electrode plate of the second portion 12, thereby achieving a good match between the double-sided electrode plate and the first portion 11 and second portion 12 to prevent lithium precipitation or waste of capacity.

According to some embodiments of this application, as shown in FIG. 7, the intermediate component 13 is a separator. In this solution, using a separator to replace the double-sided electrode plate as the intermediate component 13 may ensure a compact structure of the electrode assembly 10 and may also reduce a procedure of separately preparing the double-sided electrode plate, thereby reducing material preparation and assembly costs.

In addition, when the intermediate component 13 is a separator, in the first portion 11, an electrode plate closest to the intermediate component 13 is a first electrode plate 111; in the second portion 12, an electrode plate closest to the intermediate component 13 is a second electrode plate 121; the first electrode plate 111 and the second electrode plate 121 are each a double-sided electrode plate having a current collector with both sides provided with the active substance; and the first electrode plate 111 and the second electrode plate 121 have opposite polarities. In this solution, the electrode assembly 10 may be produced by a most conventional method of sequentially stacking a positive electrode, a separator, and a negative electrode in a laminated battery. In addition, when the first portion 11 and the second portion 12 are charged simultaneously, all active substances on the first electrode plate 111 and the second electrode plate 121 may participate in ion intercalation and deintercalation, increasing the mass energy density and achieving the same effect of increasing the overall capacity and mass energy density of the electrode assembly 10 as using the aforementioned double-sided electrode plate as the intermediate component 13.

The electrode plate closest to the intermediate component 13 in the first portion 11 refers to an electrode plate closest to the intermediate component 13 with respect to the other electrode plates among the plurality of electrode plates of the first portion 11, and this electrode plate is referred to as the first electrode plate 111. The electrode plate closest to the intermediate component 13 in the second portion 12 refers to an electrode plate closest to the intermediate component 13 with respect to the other electrode plates among the plurality of electrode plates of the second portion 12, and this electrode plate is referred to as the second electrode plate 121.

According to some embodiments of this application, when the intermediate component 13 is a separator and the first electrode plate 111 and the second electrode plate 121 are double-sided electrode plates with opposite polarities, it is preferable that the first electrode plate 111 has a negative polarity and the second electrode plate 121 has a positive polarity. Thus, when the first portion 11 and the second portion 12 are charged simultaneously, using the first electrode plate 111 with a larger coating weight as the negative electrode may allow for full intercalation of lithium ions into the second electrode plate 121 without lithium precipitation. However, if the first electrode plate 111 serves as the positive electrode and the second electrode plate 121 serves as the negative electrode, since the first electrode plate 111 has a larger coating weight, when the first portion 11 and the second portion 12 are charged simultaneously, excessive lithium ions may be deintercalated from the first electrode plate 111 and thus cannot be fully intercalated into the second electrode plate 121, leading to the risk of lithium precipitation. Such situation may still solve the basic technical problems of this application but results in certain loss in cycling performance.

In some other embodiments of this application, when the intermediate component 13 is a separator, the first electrode plate 111 and/or the second electrode plate 121 may alternatively be configured as a single-sided electrode plate, that is, the current collector on a side of at least one of the first electrode plate 111 and the second electrode plate 121 close to the intermediate component 13 is uncoated with the active substance. The polarities of the first electrode plate 111 and the second electrode plate 121 may be the same or different. That the first electrode plate 111 and/or the second electrode plate 121 may alternatively be configured as a single-sided electrode plate includes the following cases: the first electrode plate 111 is provided with the active substance on only a side facing away from the second portion 12. Alternatively, the second electrode plate 121 is provided with the active substance on only a side facing away from the first portion 11. Alternatively, the first electrode plate 111 is provided with the active substance on only a side facing away from the second portion 12, and the second electrode plate 121 is provided with the active substance on only a side facing away from the first portion 11.

That the first electrode plate 111 is provided with the active substance on only a side facing away from the second portion 12 means that the first electrode plate 111 is a single-sided electrode plate; and a side of the current collector of the first electrode plate 111 facing the second portion 12 is not provided with an active substance layer, that is, the side of the current collector of the first electrode plate 111 facing the second portion 12 is an uncoated foil region. In other words, a side of the first electrode plate 111 facing the intermediate component 13 is not provided with the active substance. That the second electrode plate 121 is provided with the active substance on only a side facing away from the first portion 11 means that the second electrode plate 121 is a single-sided electrode plate; and a side of the current collector of the second electrode plate 121 facing the first portion 11 is not provided with an active substance layer, that is, the side of the current collector of the second electrode plate 121 facing the first portion 11 is an uncoated foil region. In other words, a side of the second electrode plate 121 facing the intermediate component 13 is not provided with the active substance. The current collector is thin and is therefore usually a foil, and a region of the current collector that is uncoated with the active substance is referred to as an uncoated foil region.

In this solution, at least one of the first electrode plate 111 and the second electrode plate 121 is a single-sided electrode plate, and the side of the single-sided electrode plate facing the intermediate component 13 is not provided with the active substance. Although the basic technical effects of this application may be achieved, the presence of the uncoated foil region on the first electrode plate 111 and/or the second electrode plate 121 reduces the overall mass energy density of the electrode assembly 10.

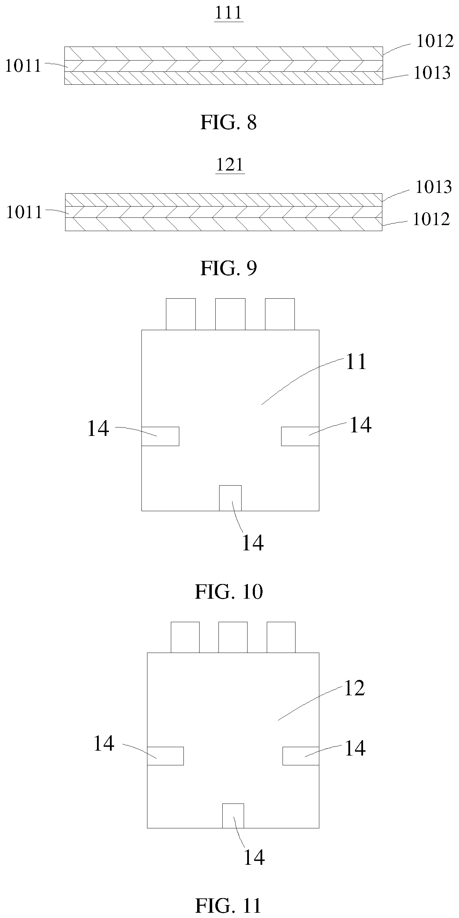

Referring to FIG. 8, FIG. 8 is a schematic structural diagram of a first electrode plate 111 according to some embodiments of this application. According to some embodiments of this application, the side of the first electrode plate 111 that is not provided with the active substance may be provided with an insulating layer 1013.

When the intermediate component 13 between the first portion 11 and the second portion 12 is a separator, since the first electrode plate 111 is a single-sided electrode plate and the side of the first electrode plate 111 facing the second portion 12 is not provided with the active substance, the side of the current collector of the first electrode plate 111 that is uncoated with the active substance is an uncoated foil region, and an adhesion effect between a surface of the uncoated foil region and the separator is poor, easily leading to relative movement of the first portion 11 and the second portion 12, and even leading to short circuit caused by contact between the positive electrode plate and the negative electrode plate in severe cases, thus affecting the safety and reliability of the electrode assembly 10.

The side of the first electrode plate 111 that is not provided with the active substance is provided with the insulating layer 1013, and a good adhesion effect is achieved between the insulating layer 1013 and the separator, not only enhance an insulation effect between the first electrode plate 111 and the second electrode plate 121, but also reducing the risk of short circuit caused by contact between the positive electrode plate and the negative electrode plate of the electrode assembly 10.

Referring to FIG. 9, FIG. 9 is a schematic structural diagram of a second electrode plate 121 according to some embodiments of this application. According to some embodiments of this application, the side of the second electrode plate 121 that is not provided with the active substance may be provided with an insulating layer 1013.

When the intermediate component 13 between the first portion 11 and the second portion 12 is a separator, since the second electrode plate 121 is a single-sided electrode plate and the side of the second electrode plate 121 facing the first portion 11 is not provided with the active substance, the side of the current collector of the second electrode plate 121 that is uncoated with the active substance is an uncoated foil region, and an adhesion effect between the surface of the uncoated foil region and the separator is poor, easily leading to relative movement of the first portion 11 and the second portion 12, and even leading to short circuit caused by contact between the positive electrode plate and the negative electrode plate in severe cases, thus affecting the safety and reliability of the electrode assembly 10.

The side of the second electrode plate 121 that is not provided with the active substance is provided with the insulating layer 1013, and a good adhesion effect is achieved between the insulating layer 1013 and the separator, not only enhancing an insulation effect between the second electrode plate 121 and the first electrode plate 111, but also reducing the risk of short circuit caused by contact between the positive electrode plate and the negative electrode plate of the electrode assembly 10.

According to some embodiments of this application, the side of the first electrode plate 111 that is not provided with the active substance and the side of the second electrode plate 121 that is not provided with the active substance may both be provided with the insulating layer 1013.

In an embodiment in which the intermediate component 13 between the first portion 11 and the second portion 12 is a separator, when the first electrode plate 111 and the second electrode plate 121 are each a single-sided electrode plate, the side of the first electrode plate 111 that is not provided with the active substance and the side of the second electrode plate 121 that is not provided with the active substance are each provided with the insulating layer 1013, not only enhancing the insulation effect between the first portion 11 and the second portion 12, but also reducing the risk of short circuit caused by contact between the positive electrode plate and the negative electrode plate of the electrode assembly 10.

In the above embodiment in which the insulating layer 1013 is provided, the side of the current collector of the electrode plate that is not provided with the active substance is provided with the insulating layer 1013. The insulating layer 1013 is applied on a surface of the current collector. A thickness of the insulating layer 1013 may be 5 µm to 70 µm, and optionally the thickness of the insulating layer 1013 is 7 µm to 10 µm. Selecting the thickness of the insulating layer 1013 within the above range may prevent coating omission, with little impact on the mass energy density of the electrode assembly 10. For example, when the insulating layer 1013 is thick, the insulating layer 1013 occupies a space in a stacking direction, reducing the active substance capacity, thereby reducing the mass energy density.

According to some embodiments of this application, the intermediate component 13 is hot glue. Hot glue (English name: Hot Glue) is a plastic adhesive whose physical state changes with temperature and whose chemical characteristics remain unchanged within a specified temperature range. The hot glue is non-toxic and odorless, belonging to an environmental-friendly chemical product. In a hot pressing process of the electrode assembly 10, the hot glue may become molten to improve the adhesion effect between the first portion 11 and the second portion 12.

In this solution, the intermediate component 13 is hot glue, which not only has an insulation effect but also may improve the connection stability between the first portion 11 and the second portion 12, thereby reducing the risk of positional movement of the first portion 11 relative to the second portion 12.

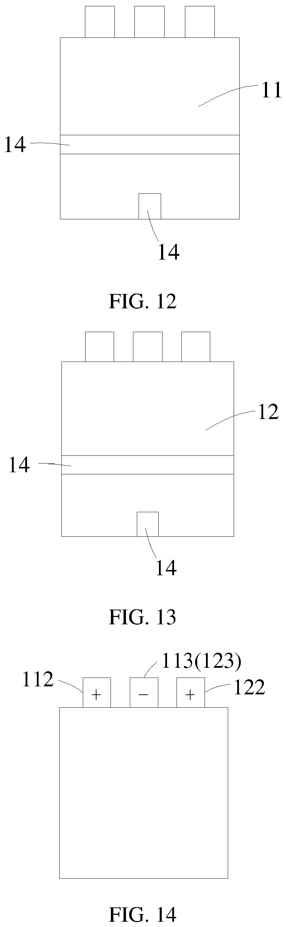

Referring to FIG. 10 to FIG. 13, FIG. 10 is a schematic diagram of a bundling member 14 on a first portion 11 according to some embodiments of this application, FIG. 11 is a schematic diagram of a bundling member 14 on a second portion 12 according to some embodiments of this application, FIG. 12 is a schematic diagram of a bundling member 14 on a first portion 11 according to some other embodiments of this application, and FIG. 13 is a schematic diagram of a bundling member 14 on a second portion 12 according to some other embodiments of this application. In an embodiment in which at least one of the first electrode plate 111 and the second electrode plate 121 is a single-sided electrode plate, the electrode assembly 10 may further include a bundling member 14, and the bundling member 14 connects the first portion 11 and the second portion 12 to reduce the risk of positional movement of the first portion 11 relative to the second portion 12.

The bundling member 14 may be an adhesive tape, facilitating the connection between the first portion 11 and the second portion 12. According to different design requirements, the bundling member 14 may be disposed at different positions. For example, the first portion 11 and the second portion 12 form a cuboid structure with tabs located on one side of the cuboid structure, and the bundling member 14 is located on a side of the cuboid structure that is provided with no tab.

The bundling member 14 may be arranged in various ways. For example, as shown in FIG. 10 and FIG. 11, one end of the bundling member 14 may be connected to a surface of the first portion 11 facing away from the second portion 12, and the other end of the bundling member 14 may be connected to a surface of the second portion 12 facing away from the first portion 11. Alternatively, two ends of the bundling member 14 may both be connected to a surface of the first portion 11 facing away from the second portion 12. Alternatively, two ends of the bundling member 14 may both be connected to a surface of the second portion 12 facing away from the first portion 11.

In addition, the bundling member 14 may be wound on an overall structure formed by the first portion 11 and the second portion 12 in various manners. As shown in FIG. 10 and FIG. 11, the bundling member 14 may be wound less than one circle. Alternatively, as shown in FIG. 12 and FIG. 13, the bundling member 14 is wound one circle. Alternatively, the bundling member 14 is wound more than one circle.

In some embodiments, the bundling member 14 may be helically wound. To ensure the connection stability between the first portion 11 and the second portion 12, a plurality of bundling members 14 may be provided, and the plurality of bundling members 14 are spaced apart to implement fixed connection between the first portion 11 and the second portion 12 at a plurality of positions.

It should be noted that the bundling member 14 may have a thickness of 10 µm to 20 µm to reduce space occupation. The bundling member 14 may have a width of 5 mm to 40 mm to ensure a large contact area with the first portion 11 and the second portion 12, thereby ensuring the connection strength with low costs.

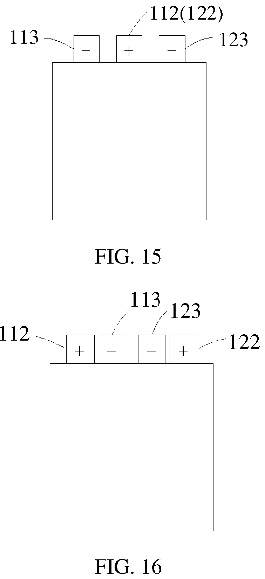

Referring to FIG. 14 to FIG. 16, FIG. 14 is a schematic diagram showing that a projection of a first negative electrode tab 113 overlaps a projection of a second negative electrode tab 123 according to some embodiments of this application, FIG. 15 is a schematic diagram showing that a projection of a first positive electrode tab 112 overlaps a projection of a second positive electrode tab 122 according to some embodiments of this application, and FIG. 16 is a schematic diagram showing that a projection of a first positive electrode tab 112 does not overlap a projection of a second positive electrode tab 122 and a projection of a first negative electrode tab 113 does not overlap a projection of a second negative electrode tab 123 according to some embodiments of this application.

According to some embodiments of this application, as shown in FIG. 14 to FIG. 16, a positive electrode plate of the first portion 11 includes a first positive electrode tab 112, a negative electrode plate of the first portion 11 includes a first negative electrode tab 113, a positive electrode plate of the second portion 12 includes a second positive electrode tab 122, and a negative electrode plate of the second portion 12 includes a second negative electrode tab 123. The electrode assembly 10 satisfies one of the following conditions: in a stacking direction of the electrode plates, the projection of the first positive electrode tab 112 does not overlap the projection of the second positive electrode tab 122, and the projection of the first negative electrode tab 113 overlaps the projection of the second negative electrode tab 123; in the stacking direction of the electrode plates, the projection of the first positive electrode tab 112 overlaps the projection of the second positive electrode tab 122, and the projection of the first negative electrode tab 113 does not overlap the projection of the second negative electrode tab 123; or in the stacking direction of the electrode plates, the projection of the first positive electrode tab 112 does not overlap the projection of the second positive electrode tab 122, and the projection of the first negative electrode tab 113 does not overlap the projection of the second negative electrode tab 123.

An electrode plate 101 includes a current collector 1011 and an active substance layer 1012 applied on a surface of the current collector 1011. A portion of the current collector 1011 that is uncoated with the active substance layer 1012 serves as a tab.

In the stacking direction of the electrode plates, the projection of the tab refers to a projection of the tab on a plane perpendicular to the stacking direction of the electrode plates.

In the embodiment with the description of "in the stacking direction of the electrode plates, the projection of the first positive electrode tab 112 does not overlap the projection of the second positive electrode tab 122, and the projection of the first negative electrode tab 113 overlaps the projection of the second negative electrode tab 123", as shown in FIG. 14, the first positive electrode tab 112 and the second positive electrode tab 122 are misaligned; the first negative electrode tab 113 and the second negative electrode tab 123 are disposed corresponding to each other; and the first negative electrode tab 113 and the second negative electrode tab 123 may be connected integrally, or the first negative electrode tab 113 and the second negative electrode tab 123 may be independent of each other. When the first negative electrode tab 113 and the second negative electrode tab 123 are connected integrally, the first portion 11 and the second portion 12 may share a negative electrode output portion. To be specific, the electrode assembly 10 may be provided with only one negative electrode output portion, reducing components, reducing assembly processes, and reducing costs.

In the embodiment with the description of "in the stacking direction of the electrode plates, the projection of the first positive electrode tab 112 overlaps the projection of the second positive electrode tab 122, and the projection of the first negative electrode tab 113 does not overlap the projection of the second negative electrode tab 123", as shown in FIG. 15, the first positive electrode tab 112 and the second positive electrode tab 122 are arranged corresponding to each other; the first negative electrode tab 113 and the second negative electrode tab 123 are misaligned; and the first positive electrode tab 112 and the second positive electrode tab 122 may be connected integrally, or the first positive electrode tab 112 and the second positive electrode tab 122 may be independent of each other. When the first positive electrode tab 112 and the second positive electrode tab 122 are connected integrally, the first portion 11 and the second portion 12 may share a positive electrode output portion. To be specific, the electrode assembly 10 may be provided with only one positive electrode output portion, reducing components, reducing assembly processes, and reducing costs.

In the embodiment with the description of "in the stacking direction of the electrode plates, the projection of the first positive electrode tab 112 does not overlap the projection of the second positive electrode tab 122, and the projection of the first negative electrode tab 113 does not overlap the projection of the second negative electrode tab 123", as shown in FIG. 16, the first positive electrode tab 112 and the second positive electrode tab 122 are misaligned, and the first negative electrode tab 113 and the second negative electrode tab 123 are misaligned, such that the first portion 11 has a first positive electrode output portion and a second negative electrode output portion, and the second portion 12 has a second positive electrode output portion and a second negative electrode output portion, where the first positive electrode output portion and the second positive electrode output portion are independent of each other, and the first negative electrode output portion and the second negative electrode output portion are independent of each other, such that the electrode assembly 10 may be designed flexibly, facilitating independent charge and discharge of the first portion 11 and the second portion 12.

In this solution, the tabs of the electrode assembly 10 may be disposed at different positions according to different requirements. In addition, when the tabs overlap, the first portion 11 and the second portion 12 may share the tabs to reduce electrode output components, thereby reducing manufacturing costs. It is also possible that the tabs of the first portion 11 and the tabs of the second portion 12 both do not overlap (as shown in FIG. 16) to meet a condition that the first portion 11 and the second portion 12 are connected in series or in parallel as required in the electrode assembly 10 through circuit control, so as to adapt to complicated power demands of electric devices. For example, when an electric device requires a large current, for example, during a start stage of an electric vehicle or an electric bicycle, the first portion 11 and the second portion 12 may be connected in parallel (when the first portion 11 and the second portion 12 share the tabs, they may also be connected in parallel to output a large current); and when the electric device requires a large voltage, the first portion 11 and the second portion 12 may be connected in series to provide a large voltage, reducing the use of additionally provided boosting electronic components in the electric device, thereby reducing costs.

It should be noted that in each solution, in a direction perpendicular to the stacking direction of the electrode plates, different tabs that do not overlap may be located on a same side of the electrode assembly 10 or on different sides of the electrode assembly 10. Optionally, for ease of connection with other components, all the tabs of the electrode assembly 10 may be disposed on a same side of the electrode assembly 10.

According to some embodiments of this application, this application provides an electrochemical apparatus 1. The electrochemical apparatus 1 includes an electrode assembly 10, an accommodating member 20, and an electrolyte. The electrode assembly 10 and the electrolyte are both accommodated in the accommodating member 20. In this solution, directly accommodating the electrode assembly 10 and the electrolyte of this application in a same accommodating member 20 may realize performance expression about different charge rates and mass energy densities in one accommodating member 20 of one electrochemical apparatus 1. Compared to a conventional method of connecting different electrochemical apparatuses 1 in series and in parallel and then packaging them to achieve the purpose of performance expression about different charge rates and mass energy densities, the solution of this application may reduce procedures and costs.

According to some embodiments of this application, a positive electrode plate of a first portion 11 includes a first positive electrode tab 112, a negative electrode plate of the first portion 11 includes a first negative electrode tab 113, a positive electrode plate of a second portion 12 includes a second positive electrode tab 122, and a negative electrode plate of the second portion 12 includes a second negative electrode tab 123.

The electrochemical apparatus 1 satisfies: in a stacking direction of the electrode plates, a projection of the first positive electrode tab 112 does not overlap a projection of the second positive electrode tab 122; a projection of the first negative electrode tab 113 overlaps a projection of the second negative electrode tab 123; the first positive electrode tab 112 is welded to a first positive electrode terminal; the second positive electrode tab 122 is welded to a second positive electrode terminal; the first negative electrode tab 113 and the second negative electrode tab 123 are welded to a negative electrode terminal; and the first positive electrode terminal, the second positive electrode terminal, and the negative electrode terminal extend out of the accommodating member 20. Alternatively, in the stacking direction of the electrode plates, the projection of the first positive electrode tab 112 overlaps the projection of the second positive electrode tab 122; the projection of the first negative electrode tab 113 does not overlap the projection of the second negative electrode tab 123; the first negative electrode tab 113 is welded to a first negative electrode terminal; the second negative electrode tab 123 is welded to a second negative electrode terminal; the first positive electrode tab 112 and the second positive electrode tab 122 are welded to a positive electrode terminal; and the first negative electrode terminal, the second negative electrode terminal, and the positive electrode terminal extend out of the accommodating member 20. Alternatively, in the stacking direction of the electrode plates, the projection of the first positive electrode tab 112 does not overlap the projection of the second positive electrode tab 122; the projection of the first negative electrode tab 113 does not overlap the projection of the second negative electrode tab 123; the first positive electrode tab 112 is welded to a third positive electrode terminal; the second positive electrode tab 122 is welded to a fourth positive electrode terminal; the first negative electrode tab 113 is welded to a third negative electrode terminal; the second negative electrode tab 123 is welded to a fourth negative electrode terminal; and the third positive electrode terminal, the fourth positive electrode terminal, the third negative electrode terminal, and the fourth negative electrode terminal extend out of the accommodating member 20. In this solution, series and/or parallel connection may be implemented as required in one electrochemical apparatus 1, greatly expanding the application scenarios of the electrochemical apparatus 1.

According to some embodiments of this application, this application further provides an electric device. The electric device includes the electrochemical apparatus 1 according to any one of the foregoing solutions, where the electrochemical apparatus 1 is configured to provide electrical energy. The electric device is any one of the foregoing devices or systems using the electrochemical apparatus 1.

Although this application has been described with reference to the preferred embodiments, various modifications to this application and replacements of the components therein with equivalents can be made without departing from the scope of this application. In particular, as long as there is no structural conflict, the various technical features mentioned in all the embodiments can be combined in any manners. This application is not limited to the specific embodiments disclosed in this specification but includes all technical solutions falling within the scope of the claims.

## Claims

1. An electrode assembly, wherein the electrode assembly has a stacked structure; the electrode assembly comprises a first portion and a second portion stacked together; the first portion and the second portion each comprises a positive electrode plate, a separator, and a negative electrode plate stacked together; the first portion and the second portion are configured to be independently charged and discharged; a mass energy density of the first portion is greater than or equal to a mass energy density of the second portion; and a charge rate of the first portion is less than or equal to a charge rate of the second portion.

2. The electrode assembly according to claim 1, wherein a ratio of the mass energy density of the first portion to the mass energy density of the second portion is 1.1 to 2.2; and a ratio of the charge rate of the first portion to the charge rate of the second portion is 0.2 to 0.8.

3. The electrode assembly according to claim 2, wherein the ratio of the mass energy density of the first portion to the mass energy density of the second portion is 1.3 to 1.8; and the ratio of the charge rate of the first portion to the charge rate of the second portion is 0.4 to 0.7.

4. The electrode assembly according to claim 1, wherein a coating weight of an active substance of the positive electrode plate of the first portion is greater than or equal to a coating weight of an active substance of the positive electrode plate of the second portion, and a compacted density of the active substance of the positive electrode plate of the first portion is greater than or equal to a compacted density of the active substance of the positive electrode plate of the second portion; and
a coating weight of an active substance of the negative electrode plate of the first portion is greater than or equal to a coating weight of an active substance of the negative electrode plate of the second portion, and a compacted density of the active substance of the negative electrode plate of the first portion is greater than or equal to a compacted density of the active substance of the negative electrode plate of the second portion.

5. The electrode assembly according to claim 1, wherein an intermediate component is disposed between the first portion and the second portion.

6. The electrode assembly according to claim 5, wherein the intermediate component is a double-sided electrode plate having a current collector with both sides provided with a active substance.

7. The electrode assembly according to claim 6, wherein a coating weight of the active substance on a side of the double-sided electrode plate facing the first portion is greater than or equal to a coating weight of the active substance on a side of the double-sided electrode plate facing the second portion, and a compacted density of the active substance on the side of the double-sided electrode plate facing the first portion is greater than or equal to a compacted density of the active substance on the side of the double-sided electrode plate facing the second portion.

8. The electrode assembly according to claim 5, wherein the intermediate component is a separator.

9. The electrode assembly according to claim 8, wherein in the first portion, an electrode plate closest to the intermediate component is a first electrode plate; in the second portion, an electrode plate closest to the intermediate component is a second electrode plate; the first electrode plate has a current collector with both sides provided with a first active substance; the second electrode plate has a current collector with both sides provided with a second active substance; and the first electrode plate and the second electrode plate have opposite polarities.

10. The electrode assembly according to claim 9, wherein the polarity of the first electrode plate is negative, and the polarity of the second electrode plate is positive.

11. The electrode assembly according to claim 1, wherein the positive electrode plate of the first portion comprises a first positive electrode tab; the negative electrode plate of the first portion comprises a first negative electrode tab; the positive electrode plate of the second portion comprises a second positive electrode tab; and the negative electrode plate of the second portion comprises a second negative electrode tab; and
the electrode assembly satisfies:
in a stacking direction of the electrode plates, a projection of the first positive electrode tab does not overlap a projection of the second positive electrode tab, and a projection of the first negative electrode tab overlaps a projection of the second negative electrode tab; or
in a stacking direction of the electrode plates, a projection of the first positive electrode tab overlaps a projection of the second positive electrode tab, and a projection of the first negative electrode tab does not overlap a projection of the second negative electrode tab; or,
in a stacking direction of the electrode plates, a projection of the first positive electrode tab does not overlap a projection of the second positive electrode tab, and a projection of the first negative electrode tab does not overlap a projection of the second negative electrode tab.

12. An electrochemical apparatus, comprising the electrode assembly according to any of claims 1 to 11, an accommodating member, and an electrolyte; wherein the electrode assembly and the electrolyte are both accommodated in the accommodating member.

13. The electrochemical apparatus according to claim 12, wherein the positive electrode plate of the first portion comprises a first positive electrode tab, the negative electrode plate of the first portion comprises a first negative electrode tab, the positive electrode plate of the second portion comprises a second positive electrode tab, and the negative electrode plate of the second portion comprises a second negative electrode tab; and
the electro plate satisfies:
in a stacking direction of the electrode plates, a projection of the first positive electrode tab does not overlap a projection of the second positive electrode tab; a projection of the first negative electrode tab overlaps a projection of the second negative electrode tab; the first positive electrode tab is welded to a first positive electrode terminal; the second positive electrode tab is welded to a second positive electrode terminal; the first negative electrode tab and the second negative electrode tab are welded to a negative electrode terminal; and the first positive electrode terminal, the second positive electrode terminal, and the negative electrode terminal extend out of the accommodating member; or,
in a stacking direction of the electrode plates, a projection of the first positive electrode tab overlaps a projection of the second positive electrode tab; a projection of the first negative electrode tab does not overlap a projection of the second negative electrode tab; the first negative electrode tab is welded to a first negative electrode terminal; the second negative electrode tab is welded to a second negative electrode terminal; the first positive electrode tab and the second positive electrode tab are welded to a positive electrode terminal; and the first negative electrode terminal, the second negative electrode terminal, and the positive electrode terminal extend out of the accommodating member; or,
in a stacking direction of the electrode plates, a projection of the first positive electrode tab does not overlap a projection of the second positive electrode tab; a projection of the first negative electrode tab does not overlap a projection of the second negative electrode tab; the first positive electrode tab is welded to a third positive electrode terminal; the second positive electrode tab is welded to a fourth positive electrode terminal; the first negative electrode tab is welded to a third negative electrode terminal; the second negative electrode tab is welded to a fourth negative electrode terminal; and the third positive electrode terminal, the fourth positive electrode terminal, the third negative electrode terminal, and the fourth negative electrode terminal extend out of the accommodating member.

14. An electric device comprising the electrochemical apparatus according to claim 12 or 13.
